# EUROPEAN PATENT APPLICATION

(11) **EP 3 869 876 A1**
(43) Date of publication of application: **25.08.2021**
(21) Application number: 18936947.3
(22) Date of filing: 16.10.2018
(51) Int. Cl.: H04W 56/00, H04W 74/08

(54) **TERMINAL AND COMMUNICATION METHOD**

(71) Applicant: NTT DoCoMo, Inc., Tokyo 100-6150 (JP)
(72) Inventor: TAKEDA, Kazuki, Tokyo 100-6150 (JP); NAGATA, Satoshi, Tokyo 100-6150 (JP); UCHINO, Tooru, Tokyo 100-6150 (JP); TAKAHASHI, Hideaki, Tokyo 100-6150 (JP); WANG, Lihui, Beijing 100190 (CN); GUO, Shaozhen, Beijing 100190 (CN); HOU, Xiaolin, Beijing 100190 (CN)
(74) Representative: Hoffmann Eitle
(86) International application number: PCT/JP2018/038556
(87) International publication number: WO 2020/079760

(57) **Abstract**

A terminal includes: a reception section that receives adjustment information for adjusting a communication timing based on a reference time; and a control section that controls a granularity of adjusting the communication timing according to a size of the adjustment information.

## Description

### Technical Field

The present disclosure relates to a terminal and a communication method.

### Background Art

Long Term Evolution (LTE) has been specified for achieving a higher data rate, lower latency, and the like in a Universal Mobile Telecommunications System (UMTS) network. Successor systems of LTE have also been studied for achieving a broader bandwidth and a higher speed based on LTE. Examples of successor systems of LTE include the systems called LTE-Advanced (LTE-A), Future Radio Access (FRA), 5th generation mobile communication system (5G), 5G plus (5G+), New Radio Access Technology (New-RAT), and New Radio (NR).

In radio communication systems such as 5G, a study is made of supporting very high synchronization (for example, also called synchronicity, time synchronization, and clock synchronization) accuracy between apparatuses, for example, on the order of 1 µs (for example, see NPL 1).

### Citation List

### Non-Patent Literature

NPL 1
   3GPP TR 22.804 V16.1.0, "Study on Communication for Automation in Vertical Domains (Release 16)", September 2018
NPL 2
   3GPP TS 38.321 V15.3.0 "3rd Generation Partnership Project; Technical Specification Group Radio Access Network; NR; Medium Access Control (MAC) protocol specification (Release 15)", September 2018
NPL 3
   3GPP TS 36.331 V15.3.0 "3rd Generation Partnership Project; Technical Specification Group Radio Access Network; Evolved Universal Terrestrial Radio Access (E-UTRA); Radio Resource Control (RRC); Protocol specification (Release 15)," September 2018

### Summary of Invention

### Technical Problem

One object of the present disclosure is to improve synchronization accuracy.

### Solution to Problem

A terminal according to one aspect of the present disclosure includes: a reception section that receives adjustment information for adjusting a communication timing based on a reference time; and a control section that controls a granularity of adjusting the communication timing, according to a size of the adjustment information.

### Advantageous Effects of Invention

According to the present disclosure, it is possible to improve synchronization accuracy.

### Brief Description of Drawings

FIG. 1 illustrates an exemplary configuration of a radio communication system according to one aspect of the present disclosure;
FIG. 2 illustrates an exemplary synchronization method by TAC (Timing Advance Command);
FIG. 3 illustrates an exemplary total timing error in the radio communication system;
FIG. 4 is a block diagram illustrating an exemplary configuration of a base station according to one aspect of the disclosure;
FIG. 5 is a block diagram illustrating an exemplary configuration of a terminal according to one aspect of the disclosure;
FIG. 6 illustrates an exemplary configuration of a MAC (Media Access Control) RAR (Random Access Response) of NR Release 15;
FIG. 7 illustrates a first exemplary configuration of the MAC RAR according to one aspect of the disclosure;
FIG. 8 illustrates a second exemplary configuration of the MAC RAR according to one aspect of the disclosure;
FIG. 9 illustrates a third exemplary configuration of the MAC RAR according to one aspect of the disclosure;
FIG. 10 illustrates an exemplary configuration of a TAC MAC CE of Release 15;
FIG. 11 illustrates a first exemplary configuration of the TAC MAC CE according to one aspect of the disclosure;
FIG. 12 illustrates a second exemplary configuration of the TAC MAC CE according to one aspect of the disclosure;
FIG. 13 illustrates a third exemplary configuration of the TAC MAC CE according to one aspect of the disclosure;
FIG. 14 illustrates an example in which CCs (Component Carriers) #0 and #1 belong to TAG (Timing Advance Group) #0 and CCs #2, #3, and #4 belong to TAG #1;
FIG. 15 illustrates an LCID (Logical Channel ID) table;
FIG. 16 illustrates an example of conventional SIB (System Information Block) 9;
FIG. 17 illustrates an example of SIB 9 according to one aspect of the disclosure;
FIG. 18 illustrates an exemplary message of downlink information transfer (DLInformationTransfer) according to one aspect of the disclosure;
FIG. 19 illustrates an exemplary configuration of a time reference information parameter (timeReferenceInfo) according to one aspect of the disclosure; and
FIG. 20 illustrates an exemplary hardware configuration of the base station and the terminal according to one aspect of the disclosure.

### Description of Embodiments

Hereinafter, an embodiment according to one aspect of the present disclosure will be described with reference to the accompanying drawings.

Application of 5G systems to various use cases is studied. Examples of the use cases include an industrial system (for example, also sometimes called time sensitive networking (TSN)) including a motion controller, a sensor, or an actuator, a live performance, a smart grid, or a local conference system. These use cases may require stricter requirements than existing systems in terms of synchronization accuracy between apparatuses (for example, also sometimes called user equipment (UE), terminals, nodes, or entities).

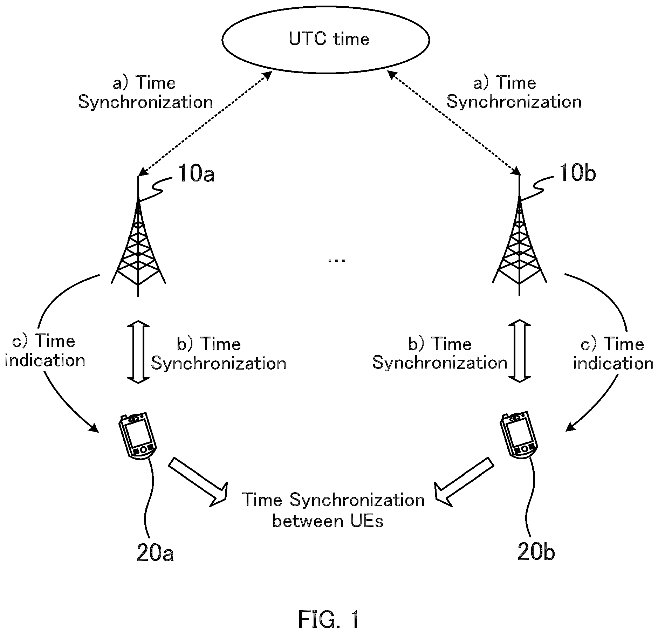

FIG. 1 illustrates an exemplary configuration of a radio communication system according to an aspect of the present disclosure.

As illustrated in FIG. 1, the radio communication system includes, for example, base stations (for example, also called gNB or eNB) 10a and 10b and terminals (for example, also called UE) 20a and 20b. For example, terminal 20a makes radio connection (radio access) to base station 10a. For example, terminal 20b makes radio connection (radio access) to base station 10b.

Note that the numbers of base stations and terminals are each not limited to two and may be one or three or more. Configurations of base station 10 and terminal 20, which will be described later, indicate one example of functions related to the present embodiment. Base station 10 and terminal 20 may have functions not shown. Function classification or names of functional sections are not limited as long as their functions perform operations according to the embodiment.

Operations for establishing synchronization between terminal 20a and terminal 20b include, for example, the following (operation a), (operation b), and (operation c).

(operation a) Base station 10a and base station 10b acquire time information indicating reference time from a server (not shown) and synchronize with the reference time. FIG. 1 illustrates the case where coordinated universal time (UTC) is used as an example of the reference time. However, the reference time is not limited to UTC and may be GPS (Global Positioning System) time or local time. Note that UTC may be identified with GMT (Greenwich Mean Time).

(operation b) Base station 10a and terminal 20a synchronize with each other on the basis of the reference time with which base station 10a synchronizes. Similarly, base station 10b and terminal 20b synchronize with each other on the basis of the reference time with which base station 10b synchronizes.

(operation c) There is a possibility that a propagation path between base station 10a and terminal 20a and a propagation path between base station 10b and terminal 20b may be different from each other. When differences in propagation paths between terminals and a base station occur, they may cause an error in reception timing (in other words, propagation delay) of the reference time information in the terminals, which may degrade synchronization accuracy among the terminals. Therefore, for example, terminal 20a and terminal 20b adjust (or correct) synchronization by using adjustment information (for example, a timing advance (TA) command to be described later) related to the time notified by base station 10a and base station 10b, respectively.

By the above operations, each of terminal 20a and terminal 20b synchronizes with the reference time (for example, UTC). Terminal 20a and terminal 20b each synchronize with the reference time, which establishes synchronization between terminal 20a and terminal 20b.

Next, an adjustment method of synchronization between apparatuses (operation (c) shown in FIG. 1) will be described.

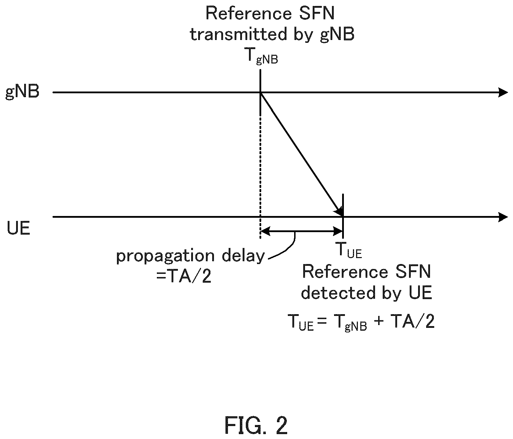

FIG. 2 illustrates an exemplary synchronization adjustment processing between a gNB (for example, base station 10a or base station 10b in FIG. 1) and a UE (for example, terminal 20a or terminal 20b in FIG. 1).

As illustrated in FIG. 2, the gNB notifies the UE of information on the reference time (hereinafter called time reference information) (for example, corresponding to operation (b) in FIG. 1).

The time reference information includes the reference time (hereinafter denoted by "T_{gNB}") acquired by the gNB The time reference information may include reference SFN information (for example, called a reference SFN) indicating time of which frame timing (for example, system frame number (SFN)) reference time T_{gNB} is. For example, time "T_{gNB}" may indicate time at an ending boundary of a frame indicated by the reference SFN. The time reference information may include other information different from T_{gNB} and the reference SFN.

The time reference information is notified, for example, from the gNB to the UE. For notification from the gNB to the UE, system information (for example, system information block (SIB)), which is one example of broadcast information, or higher layer signaling (called higher layer parameters or radio resource control (RRC) signaling) may be used. The system information used for notification of the time reference information is, for example, SIB 9 in 5G (NR) systems or SIB 16 in LTE systems. For notification of the time reference information, for example, UE-dedicated RRC signaling (for example, dedicated RRC signaling or unicast RRC signaling) may be used.

As illustrated in FIG. 2, the gNB notifies (in other words, transmits or delivers) adjustment information (for example, a TA command (TAC)) indicating an adjustment value for adjusting communication timing based on the reference time to the UE. The TA command is an adjustment value for synchronously receiving, by the gNB, signals transmitted from a plurality of UEs to the gNB through different propagation paths or different distances. As an accumulated value of the TA command, for example, there is set a value twice a time corresponding to a propagation path until a signal reaches a UE from the gNB. In other words, the half (1/2) value of the accumulated value of the TA command represents a propagation delay time added correspondingly to the propagation path between the gNB and the UE.

The TA command may be information representing the time itself corresponding to the propagation delay, or may be information (for example, an index) for calculating the time corresponding to the propagation delay.

The TA command may be notified using a RAR (Random Access Response) (or also called "message 2") in random access (RA) processing. In addition, the TA command may be notified using a MAC control element (Media Access Control Control Element (MAC CE)) in a case different from the RA processing.

For example, the gNB generates a TA command for each UE, and transmits each TA command to the corresponding UE. After receiving the TA command, the UE calculates a timing adjustment value (TA/2 in the example in FIG. 2) on the basis of value TA set to the TA command. The UE adjusts time T_{gNB} included in the time reference information using the calculated timing adjustment value or its accumulated value and can calculate time T_{UE} (=T_{gNB}+TA/2). In the case different from the RA processing, every time a TA command is notified, the UE can update the timing adjustment value (that is, the accumulated value of the TA command) using the new TA command notified. Thanks to this update, the UE can follow a change in the UE's communication environment and synchronize with the reference time notified from the gNB, as illustrated in FIG. 2.

For example, a pair of base station 10a and terminal 20a and a pair of base station 10b and terminal 20b shown in FIG. 1 each perform similar synchronization processing to the gNB and UE shown in FIG. 2. This has terminal 20a and terminal 20b shown in FIG. 1 each synchronize with the reference time, and as a result, terminal 20a and terminal 20b become synchronized.

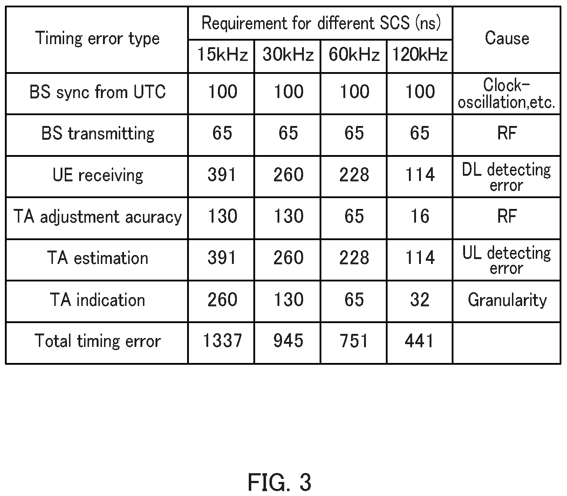

Granularity of TA indication (resolution of TA or a minimum value that can be indicated by TA) by a legacy TA command is 16×(64/2^{µ})×T_{c}≈(520/2^{µ}) ns. Where, µ is a value corresponding to SCS (SubCarrier Spacing). For example, µ=0 corresponds to SCS "15 kHz," and µ=1 corresponds to SCS "30 kHz." T_{c} denotes a basic time unit in NR and is, for example, 0.509 ns. Therefore, as shown in FIG. 3, in the case of SCS "15 kHz," the maximum error value that can occur when using the granularity of the legacy TA indication is 260 ns (=520/2), which is half of the resolution of TA. Considering other various errors in addition to the lack of the resolution of TA, the maximum value of total timing error is 1337 ns. Note that "legacy" in the embodiment may mean that it is defined in NPLs 2 and 3. Therefore, "legacy" can be read as "Release 15" or "Release 15 NR."

For example, a use case like giving a live performance requires delay to be equal to or less than 0.25 µs to 1 µs. However, as described above, in the case of SCS "15 kHz," the total timing error exceeds 1 µs, and this requirement cannot be satisfied. That is, at SCS "15 kHz," timing inaccuracies due to the granularity of the legacy TA indication cannot be ignored. For other SCS, it is not possible to keep an error down within 0.25 µs as shown in FIG. 3. Therefore, in order to minimize the total timing error, TA indication of finer granularity is studied. Application of the TA indication of finer granularity is not limited to the case of SCS "15 kHz." For example, as shown in FIG. 3, the TA indication of finer granularity may be applied to SCS "30 kHz" whose total timing error is close to 1 µs or may be applied to SCS "60 kHz" and/or "130 kHz."

In UL transmission from the UE, T_{TA}=(N_{TA}+N_{TA, offset})×T_{c} starts before start of a corresponding DL (Downlink) frame. N_{TA} denotes TA between a DL and a UL (Uplink). N_{TA,offset} denotes a fixed offset used for calculating TA. In the case of RA processing, N_{TA}=T_{A}×16×(64/2^{µ}), T_{A=}0, 1, 2, ..., 3846, and T_{A} is indicated to the UE by MAC RAR In the case of other processing, N_{TA_new}=N_{TA_old}+(TA-31)×16×(64/2^{µ}), T_{A}=0, 1, 2, ..., 63, and T_{A} is indicated to the UE by MAC CE. In this case also, the TA indication of finer granularity is studied in order to improve synchronization accuracy.

Therefore, the TA indication of finer granularity will be described in the disclosure.

### [Configurations of Base Station and Terminal]

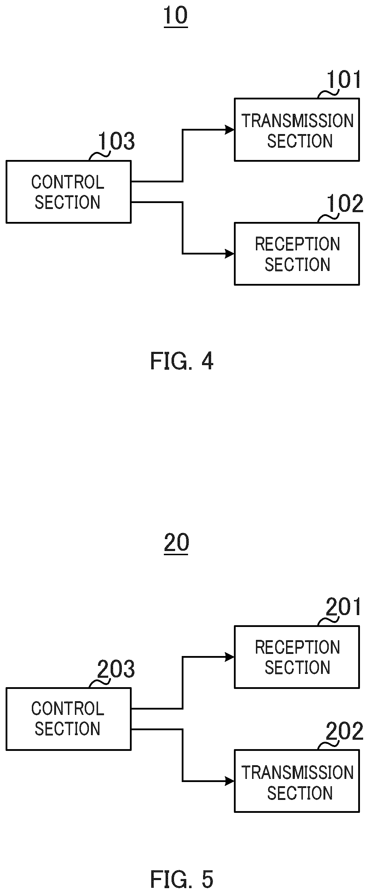

FIG. 4 is a block diagram illustrating an exemplary configuration of base station 10 (for example, base station 10a or base station 10b shown in FIG. 1) according to the embodiment. Base station 10 includes, for example, transmission section 101, reception section 102, and control section 103.

Transmission section 101 transmits a signal (DL signal) for terminal 20 to terminal 20. For example, transmission section 101 transmits the DL signal under control of control section 103.

The DL signal may include, for example, system information (for example, SIB 9 and SIB 16) including the time reference information, higher layer signaling including the time reference information, an RA message (for example, an RAR) including a TA command, or a MAC CE (TA MAC CE) including a TA command.

Reception section 102 receives a signal (UL signal) transmitted from terminal 20. For example, reception section 102 receives the UL signal on the basis of control from control section 103. The UL signal includes, for example, an RA preamble, measurement reporting (for example, a measurement report (MR)) indicating a measurement result of communication quality in terminal 20, channel quality information, a signal on a control channel, a signal on a data channel, or a reference signal. The channel quality information is, for example, channel quality information (CQI). The control channel is, for example, a physical uplink control channel (PUCCH), and the data channel is, for example, a physical uplink shared channel (PUSCH). The reference signal is, for example, a sounding reference signal (SRS).

Control section 103 controls transmission processing in transmission section 101 and reception processing in reception section 102. For example, control section 103 controls transmission processing of a TA command in transmission section 101.

FIG. 5 is a block diagram illustrating an exemplary configuration of terminal 20 (for example, terminal 20a or terminal 20b shown in FIG. 1) according to the embodiment. Terminal 20 includes, for example, reception section 201, transmission section 202, and control section 203.

Reception section 201 receives a DL signal transmitted from base station 10. For example, reception section 201 receives the DL signal on the basis of control from control section 203. Note that reception section 201 may directly receive signals transmitted from other terminals 20 (not shown) without passing through base station 10.

Transmission section 202 transmits a UL signal to base station 10. For example, transmission section 202 transmits the UL signal on the basis of control from control section 203. Note that transmission section 202 may directly transmit signals destined to other terminals 20 (not shown) without passing through base station 10.

Control section 203 controls reception processing in reception section 201 and transmission processing in transmission section 202. For example, control section 203 detects a TA command from the received DL signal and then control section 203 synchronizes communication timing with the reference time using the TA command detected.

Next, the TA indication of finer granularity in comparison with the legacy TA indication will be described. Using the TA indication of finer granularity allows for minimizing the total timing error as described above, and improving synchronization accuracy between terminals 20.

The TA indication of finer granularity may be implemented by at least one of the following (A1), (A2), and (A3).

(A1) At least one bit (the maximum is, for example, four bits) is added to the legacy TA command. That is, the size of the legacy TA command is extended. For example, in order to double granularity, one bit is added to the legacy TA command; in order to quadruple, two bits are added; in order to multiply by eight, three bits are added; and in order to multiply by sixteen, four bits are added.

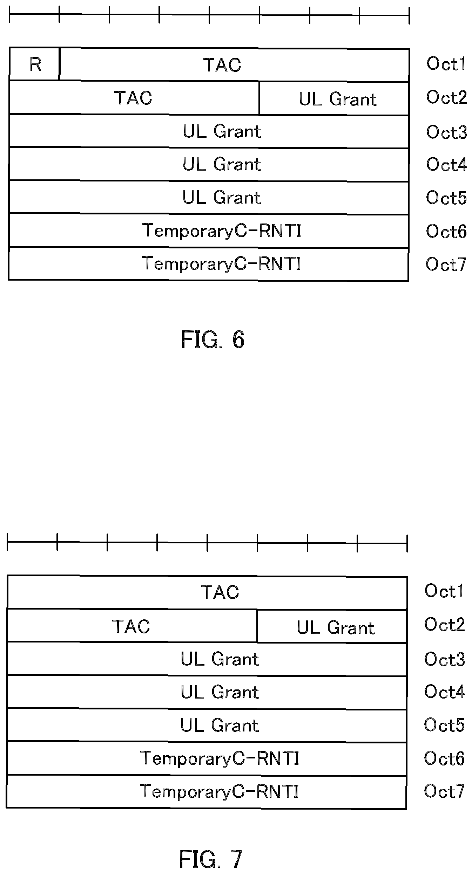

(A2) At least one of the following options (A2-1) to (A2-3) is applied to an RAR (legacy RAR) in NR Release 15 illustrated in FIG. 6.

(A2-1) In order to extend the TA command by one bit, a reserved bit of the RAR is used for the TA command. For example, a reserved bit of a first bit of the beginning (Oct 1) of the RAR is used for the TA command as illustrated in FIG. 7.

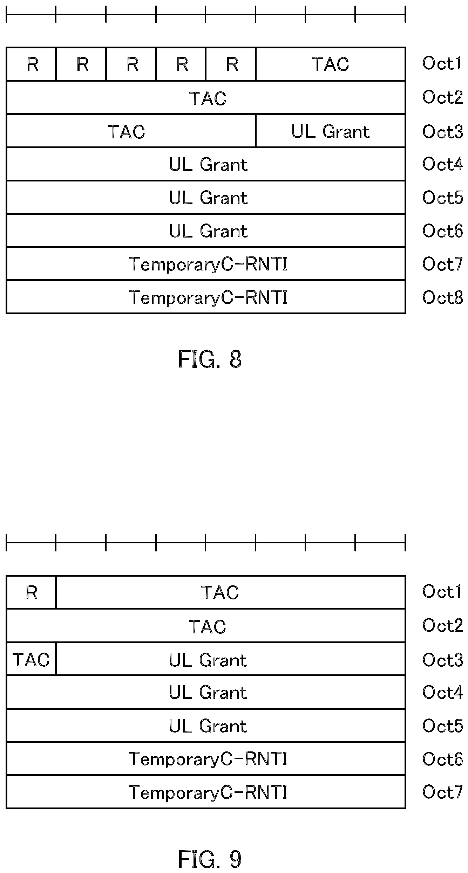

(A2-2) In order to extend the TA command by one bit or more, the RAR is extended to eight octets, and additional bits newly available are used for the TA command (the legacy RAR is composed of seven octets as illustrated in FIG. 6). That is, the RAR is extended to eight octets and at least some of the eight bits increased by the extension are used for the TA command. For example, as illustrated in FIG. 8, four bits, at least some of the bits increased by extension of the RAR, are used for the TA command and thereby the TA command is extended to sixteen bits.

(A2-3) In order to extend the TA command by one bit or more and keep the RAR to seven octets, another field of the RAR, for example, a UL grant field, is reduced. That is, bits increased by reducing another field are used for the TA command. For example, as illustrated in FIG. 9, four bits increased by reducing the UL grant field are used for the TA command, so that the TA command is extended to sixteen bits.

At least two of the above options (A2-1) to (A2-3) may be combined. For example, (A2-1) and (A2-2) may be combined to use the reserved bit of the RAR and bits increased by extension of the RAR for the TA command. For example, (A2-1) and (A2-3) may be combined to use the reserved bit of the RAR and bits increased by reducing another field for the TA command.

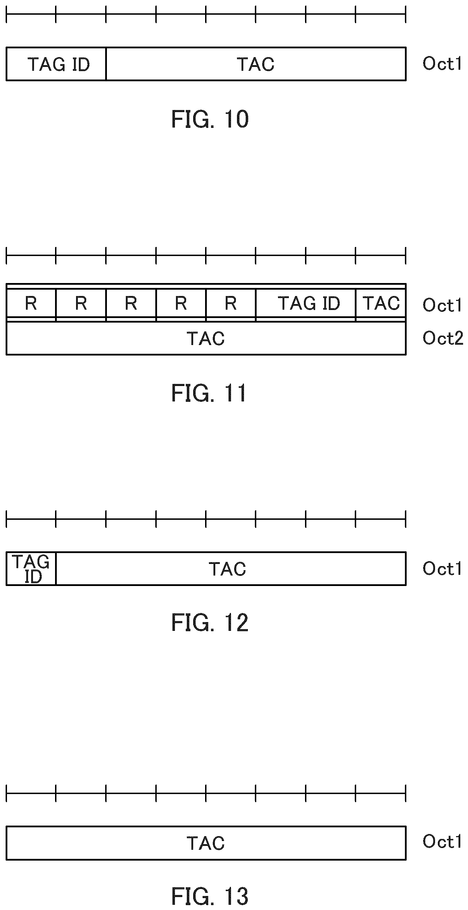

(A3) At least one of the following options (A3-1) to (A3-3) is applied to a TAC MAC CE in NR Release 15 illustrated in FIG. 10.

(A3-1) In order to extend the TA command by one bit or more, the TAC MAC CE is extended to two octets. That is, the TAC MAC CE is extended to two octets, and at least some of eight bits increased by that extension are used for the TA command. For example, as illustrated in FIG. 11, three bits, which are at least some of bits increased by the extension of the TAC MAC CE, are used for the TA command, so that the TA command is extended to nine bits.

(A3-2) In order to extend the TA command by one bit, one bit in a TAG (Timing Advance Group) ID field is used for the TA command. For example, as illustrated in FIG. 12, the TAG ID field is reduced by one bit, and one bit increased by the reduction is used for the TA command. In this case, two TAGs can be supported using a remaining one-bit TAG ID.

(A3-3) In order to extend the TA command by one or two bits, the TAG ID field is removed. Then, a field corresponding to the removal is used for the TA command. That is, the TAG ID field is not used, and one or two bits increased by not using the TAG ID field are used for the TA command. In this case, (A3-3-1) the case of one TAG can be supported. Alternatively, (A3-3-2) up to four TAGs can be supported in the restriction that a TAC MAC CE for one TAG can be transmitted only by a CC (Component Carrier) in that TAG.

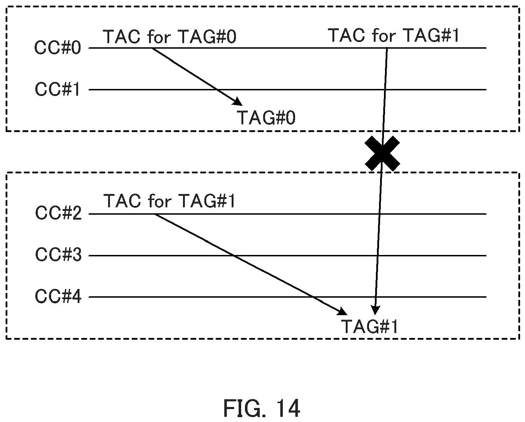

One example of the above (A3-3-2) will be described with reference to FIG. 14. For example, as illustrated in FIG. 14, CCs #0 and #1 belong to TAG #0, and CCs #2, #3, and #4 belong to TAG #1. In this case, terminal 20 interprets a TA command received on CC #0 or #1 as a TA command for TAG #0 to use it for TA control of TAG #0, and interprets a TA command received on CC #2, #3, or #4 as a TA command for TAG #1 to use it for TA control of TAG #1. In other words, a TAC for TAG #0 can be transmitted only by a CC (for example CC #0) in TAG #0. Also, a TAC for TAG #1 can be transmitted only by a CC (for example CC #2) in TAG #1. The TAC for TAG #1 may be restrained from transmission on a CC (for example, CC #0) in different TAG #0.

Next, a method that allows the UE (terminal 20) to determine which format of the TA command should be applied will be described.

The following option (B1) or (B2) may be applied in initial access (RA processing).

(B1) The UE (always) uses a format of a legacy granularity TA command. For example, the UE uses a legacy RAR illustrated in FIG. 6 in initial access.

(B2) The UE (always) uses a format of a finer granularity TA command. For example, the UE uses any RAR illustrated in FIGS. 7 to 9 in initial access.

At least one of the following options (C1) to (C4) may be applied after completion of initial access or in the case of being different from initial access.

(C1) The UE (always) uses a format of the finer granularity TA command. For example, the UE uses TAC MAC CE formats illustrated in FIGS. 11 to 13.

(C2) The UE supports only one finer granularity TAC MAC CE format and supports UE-dedicated RRC signaling for setting whether to use the finer granularity TAC MAC CE format. For example, the UE supports any one TAC MAC CE format illustrated in FIGS. 11 to 13. The UE-dedicated RRC signaling may be unicast RRC signaling carrying the time reference information. Alternatively, the UE-dedicated RRC signaling may be newly defined.

(C3) The UE supports only one TAC MAC CE format and use of the TAC MAC CE format is determined based on SIB 9. If time reference information of finer granularity is instructed, a finer granularity TAC MAC CE format is used. That is, whether to use the finer granularity TAC MAC CE format may be determined based on other information (SIB 9 in the above case).

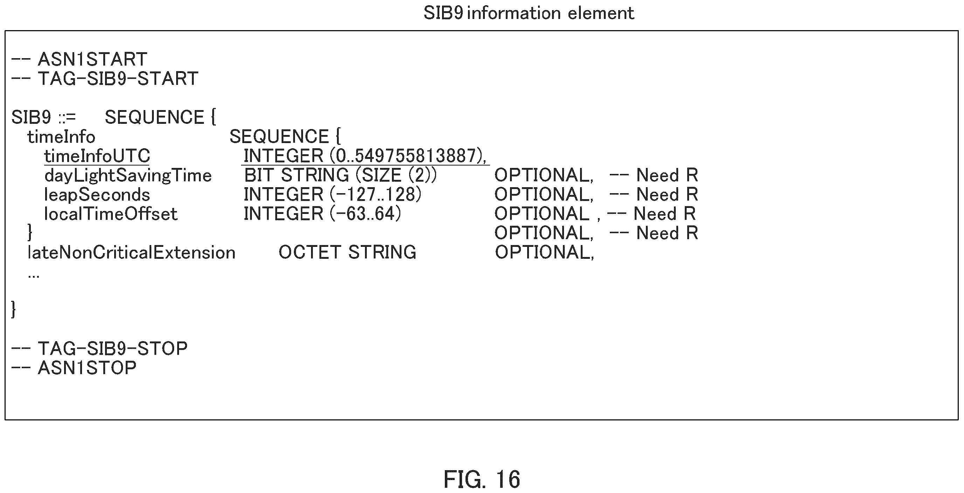

(C3-1) SIB 9 may include information related to GPS time and/or UTC. (C3-2) If a time reference information parameter (timeReferenceInfo) is included in SIB 9 (for example, like SIB 16 in LTE Release 15), the finer granularity TAC MAC CE format may be used. If the time reference information parameter (timeReferenceInfo) is not included in SIB 9, the legacy granularity TAC MAC CE format may be used. The time reference information parameter will be described in detail with reference to FIGS. 16 to 19.

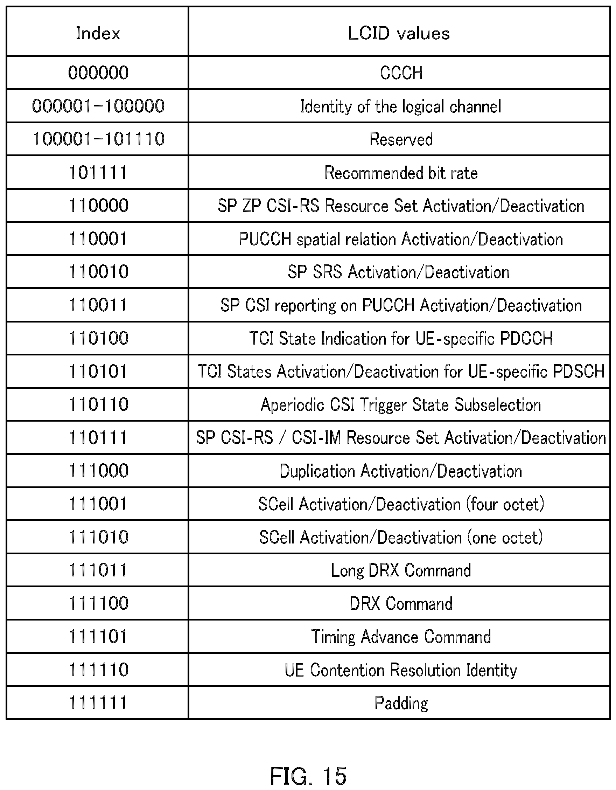

(C4) The UE supports two or more TAC MAC CE formats and LCID (Logical Channel ID) can be used to distinguish the different TAC MAC CE formats. For example, at least one of reserved indexes ("100001-101110 (binary digit)" in FIG. 15) in an LCID table (see NPL 2) illustrated in FIG. 15 may be used to distinguish the different TAC MAC CE formats.

### [Modified Example 1]

Next, modified examples of the TAC MAC CE will be described. At least one of the following (D1) and (D2) may be applied to the TAC MAC CE.

(D1) For each TAG, variable X (0, 1, 2, or 3) for determining TA granularity is quasi-statically configured by RRC. (D1-1) If the TA granularity is once configured, the TA granularity for the TAG is 2^{-X}×16×(64/2^{µ})×T_{c}. (D1-2) For each TAG for which the value of X is set, the maximum value of TA indication becomes 2^{-X} times and the granularity of TA becomes 2^{X} times.

(D2) If the RAR is still based on the legacy TA granularity, at least one of the following options (D2-1) and (D2-2) may be applied.

(D2-1) When an RAR for a given TAG is once received by the UE, the UE does not apply the finer TA granularity to the TAG. That is, until the finer TA granularity is reconfigured, the legacy TA granularity is applied to the TAG. In other words, the UE applies the legacy TA granularity every time an RAR is received, and applies the legacy TA granularity until the finer granularity TA indication is received.

(D2-2) The UE uses the legacy TA granularity for the RAR and applies the finer TA granularity to other processing. That is, after the RAR, the TA granularity by the TAC MAC CE is still based on finer granularity configured to RRC. In other words, if the UE has applied the finer TA granularity before the RAR, the UE also applies the finer TA granularity after the RAR.

### [Modified Example 2]

Whether to apply the finer TA granularity may be determined based on SCS. For example, in the case of SCS "15 kHz" and "30 kHz," as it is difficult to satisfy a requirement of delay within 1 µs, the finer TA granularity is applied, and in the case of other SCS, as it is easy to satisfy the requirement, the legacy TA granularity may be applied.

Next, the time reference information will be described in detail with reference to FIGS. 16 to 19.

FIG. 16 illustrates an example of conventional SIB 9.

As illustrated in FIG. 16, conventional NR SIB 9 is similar to LTE SIB 16 and includes information related to GPS time and UTC (Coordinated Universal Time) (see a parameter "timeInfoUTC" in FIG. 16). In the same manner as SIB 16 before LTE Release 15, as granularity of the parameter timeInfoUTC is 10 ms, the requirement of time synchronization of 1 µs or less cannot be satisfied even if SIB 9 having the parameter timeInfoUTC is used.

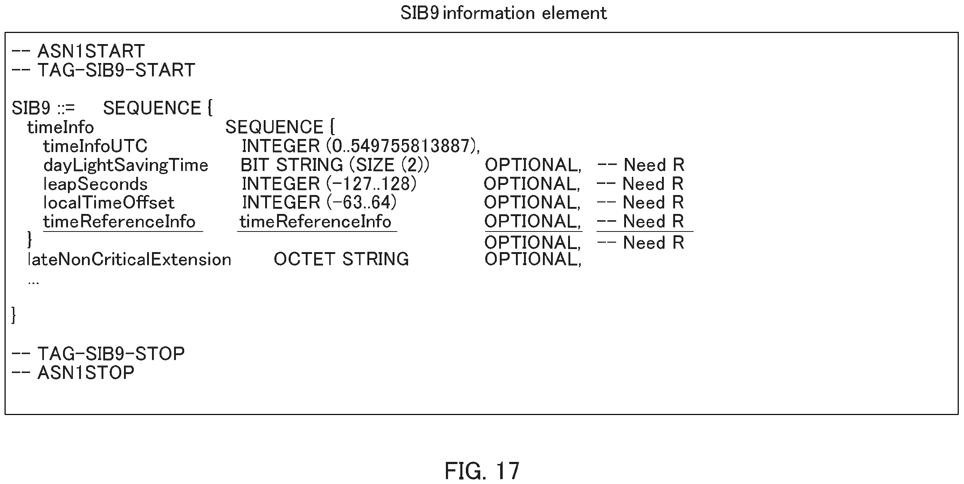

FIG. 17 illustrates an example of SIB 9 according to the embodiment.

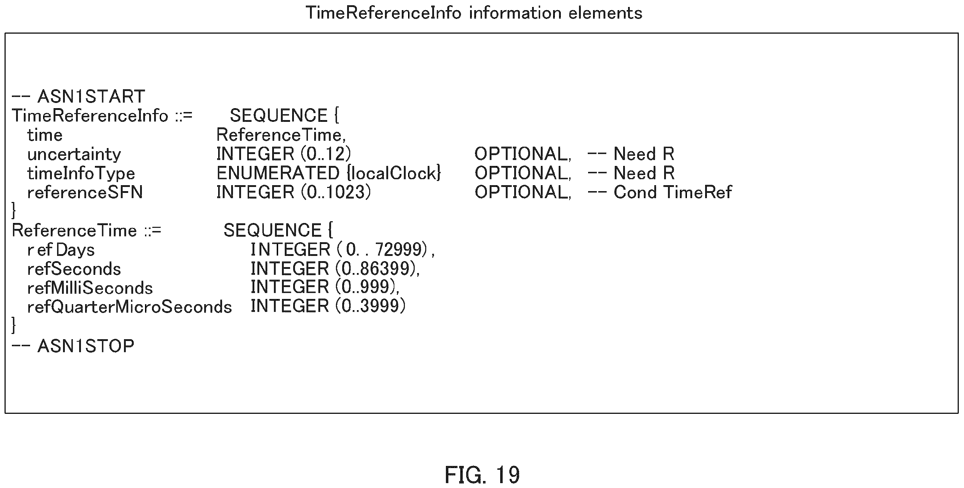

LTE SIB 16 was enhanced to satisfy a high synchronization requirement in Release 15. Therefore, NR SIB 9 according to the embodiment may be similarly enhanced. For example, as illustrated in FIG. 17, it is made possible to configure a time reference information parameter (timeReferenceInfo) similar to SIB 16 in SIB 9. Information elements of the time reference information (timeReferenceInfo information elements) may have a configuration as illustrated in FIG. 19 (see NPL 3). This allows SIB 9 to handle a finer grain size of 0.25 µs and can satisfy a synchronization time requirement of 1 µs or less.

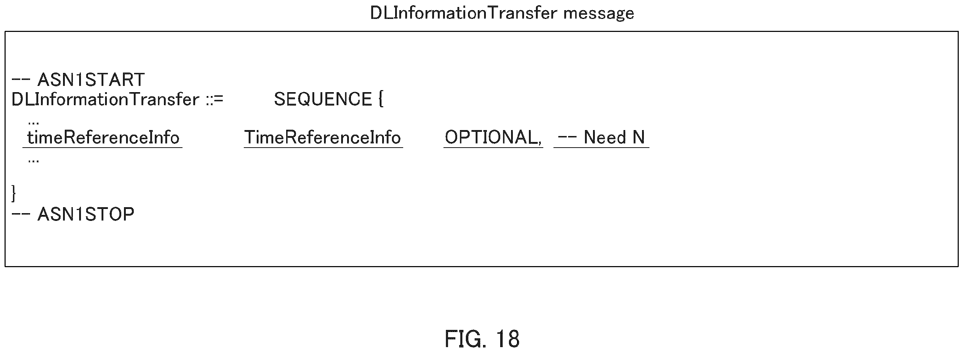

FIG. 18 illustrates an exemplary message of downlink information transfer (DLInformationTransfer) according to the embodiment.

The time reference information parameter (timeReferenceInfo) via UE-dedicated RRC signaling is introduced in LTE Release 15. Therefore, the embodiment may be similarly enhanced. For example, as illustrated in FIG. 18, it is made possible to configure the time reference information parameter (timeReferenceInfo) in the message of downlink information transfer (DLInformationTransfer). Information elements of the time reference information may have the configuration as illustrated in FIG. 19 (see NPL 3).

### [Summary of Present Disclosure]

A terminal according to one aspect of the present disclosure includes a reception section configured to receive adjustment information (for example, a TA command) for adjusting communication timing based on reference time and a control section configured to control granularity of adjusting the communication timing according to size of the adjustment information (for example, the number of bits).

According to this configuration, the terminal can adjust time synchronization with finer granularity. Thus, the present disclosure contributes to satisfying a time synchronization requirement of, for example, 1 µs or less.

### (Hardware Configuration and the like)

Note that the block diagrams used in the description of the above embodiment illustrate blocks of functional units. These functional blocks (constituent sections) are implemented by any combination of at least one of hardware and software. Methods for implementing the functional blocks are not particularly limited. That is, the functional blocks may be implemented by using one apparatus physically or logically coupled. Two or more apparatuses physically or logically separated may be directly or indirectly (for example, using wires or radio) connected, and the plurality of apparatuses may implement the functional blocks. The functional blocks may be implemented by combining software with the above-described one apparatus or the above-described plurality of apparatuses.

Functions include, but not limited to, judging, deciding, determining, computing, calculating, processing, deriving, investigating, searching, confirming, receiving, transmitting, outputting, accessing, resolving, selecting, choosing, establishing, comparing, assuming, expecting, considering, broadcasting, notifying, communicating, forwarding, configuring, reconfiguring, allocating or mapping, and assigning. For example, a functional block (constituent section) that makes transmission function is called a transmitting section or a transmitter. In any case, as described above, implementation methods are not particularly limited.

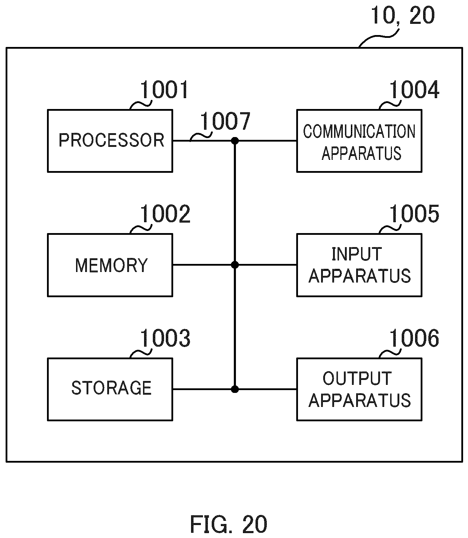

For example, the base station, the user terminal, and the like in the embodiment of the present disclosure may function as a computer that executes processing of the radio communication methods of the disclosure. FIG. 20 illustrates an exemplary hardware configuration of the base station and the user terminal according to the embodiment of the present disclosure. Base station 10 and user terminal 20 described above may be physically configured as a computer apparatus including processor 1001, memory 1002, storage 1003, communication apparatus 1004, input apparatus 1005, output apparatus 1006, bus 1007, and the like.

Note that the term "apparatus" in the following description can be read as a circuit, a device, a unit, or the like. The hardware configurations of base station 10 and user terminal 20 may include one or more apparatuses for each of the apparatuses illustrated in the figure or may not include some of the apparatuses.

The functions in base station 10 and user terminal 20 are implemented by loading predetermined software (program) into hardware, such as processor 1001 and memory 1002, thereby causing processor 1001 to perform arithmetic and control communication performed by communication apparatus 1004 and at least one of reading and writing data from or into memory 1002 and storage 1003.

Processor 1001 operates an operating system to entirely control the computer, for example. Processor 1001 may be composed of a central processing unit (CPU) including an interface with peripheral apparatuses, a control apparatus, an arithmetic apparatus, a register, and the like. For example, control sections 103 and 203 and the like described above may be implemented by processor 1001.

Processor 1001 reads out a program (program code), a software module, or data from at least one of storage 1003 and communication apparatus 1004 to memory 1002 and executes various types of processing according to the read-out program or the like. The program used is a program for causing the computer to execute at least part of the operations described in the embodiment. For example, control section 203 of user terminal 20 may be implemented by a control program stored in memory 1002 and executed by processor 1001, and the other functional blocks may also be implemented in the same way. While it has been explained that the various types of processing described above are executed by one processor 1001, the various types of processing may be executed by two or more processors 1001 at the same time or in succession. Processor 1001 may be implemented by one or more chips. Note that the program may be transmitted from a network through a telecommunication line.

Memory 1002 is a computer-readable recording medium and may be composed of at least one of, for example, a ROM (Read Only Memory), an EPROM (Erasable Programmable ROM), an EEPROM (Electrically Erasable Programmable ROM), and a RAM (Random Access Memory). Memory 1002 may be called a register, a cache, a main memory (main storage apparatus), or the like. Memory 1002 can save a program (program code), a software module, and the like that can be executed to carry out the radio communication methods according to the embodiment of the present disclosure.

Storage 1003 is a computer-readable recording medium and may be composed of at least one of, for example, an optical disk such as a CD-ROM (Compact Disc ROM), a hard disk drive, a flexible disk, a magneto-optical disk (for example, a compact disc, a digital versatile disc, or a Blue-ray (registered trademark) disc), a smart card, a flash memory (for example, a card, a stick, or a key drive), a floppy (registered trademark) disk, and a magnetic strip. Storage 1003 may also be called an auxiliary storage apparatus. The storage medium described above may be, for example, a database, a server, or another appropriate medium including at least one of memory 1002 and storage 1003.

Communication apparatus 1004 is hardware (transmission/reception device) for communication between computers through at least one of a wired network and a radio network and is also called, for example, a network device, a network controller, a network card, or a communication module. Communication apparatus 1004 may be composed of a high-frequency switch, a duplexer, a filter, a frequency synthesizer, and the like in order to implement at least one of, for example, frequency division duplex (FDD) and time division duplex (TDD). For example, the antennas of the base station and the terminal, and the like may be implemented by communication apparatus 1004. A transmission/reception section may be implemented in such a way that a transmission section and a reception section are physically or logically separated from each other.

Input apparatus 1005 is an input device (for example, a keyboard, a mouse, a microphone, a switch, a button, or a sensor) that receives input from the outside. Output apparatus 1006 is an output device (for example, a display, a speaker, or an LED lamp) that outputs to the outside. Note that input apparatus 1005 and output apparatus 1006 may be integrated (for example, a touch panel).

The apparatuses, such as processor 1001 and memory 1002, are connected by bus 1007 for communication of information. Bus 1007 may be composed of a single bus or buses different among the apparatuses.

Furthermore, base station 10 and user terminal 20 may include hardware, such as a microprocessor, a digital signal processor (DSP), an ASIC (Application Specific Integrated Circuit), a PLD (Programmable Logic Device), and an FPGA (Field Programmable Gate Array), and the hardware may implement part or all of the functional blocks. For example, processor 1001 may be implemented by using at least one of these pieces of hardware.

### <Notification and Signaling of Information>

The notification of information is not limited to the aspects/embodiment described in the present disclosure, and the information may be notified by another method. For example, the notification of information may be carried out by one or a combination of physical layer signaling (for example, DCI (Downlink Control Information) and UCI (Uplink Control Information)), higher layer signaling (for example, RRC (Radio Resource Control) signaling, MAC (Medium Access Control) signaling, broadcast information (MIB (Master Information Block) and SIB (System Information Block))), and other signals. The RRC signaling may be called an RRC message and may be, for example, an RRC connection setup message or an RRC connection reconfiguration message.

### <Applicable System>

The aspects/embodiment described in the present disclosure may be applied to at least one of systems using LTE (Long Term Evolution), LTE-A (LTE-Advanced), SUPER 3G, IMT-Advanced, 4G (4th generation mobile communication system), 5G (5th generation mobile communication system), FRA (Future Radio Access), NR (New Radio), W-CDMA (registered trademark), GSM (registered trademark), CDMA2000, UMB (Ultra Mobile Broadband), IEEE 802.11 (Wi-Fi (registered trademark)), IEEE 802.16 (WiMAX (registered trademark)), IEEE 802.20, UWB (Ultra-WideBand), Bluetooth (registered trademark), and other appropriate systems, and next-generation systems extended based on those systems. In addition, they may be applied to combinations of a plurality of systems (for example, a combination of 5G and at least one of LTE and LTE-A).

### <Processing Procedure and the like>

The orders of the processing procedures, the sequences, the flow charts, and the like of the aspects/embodiment described in the present disclosure may be changed as long as there is no contradiction. For example, elements of various steps are presented in exemplary orders in the methods described in the present disclosure, and the methods are not limited to the presented specific orders.

### <Operations of Base Station>

The specific operations which are described in the disclosure as being performed by the base station may be performed by an upper node depending on the situation. Various operations performed for communication with a terminal in a network including one or more network nodes including a base station can be obviously performed by the base station and/or a network node other than the base station (examples include, but not limited to, MME or S-GW). Although the case where there is one network node other than the base station is illustrated in the above, a plurality of other network nodes may be combined (for example, MME and S-GW).

### <Directions of Input and Output>

The information and the like (see paragraph "Information and Signals") can be output from a higher layer (or a lower layer) to a lower layer (or a higher layer). The information and the like may be input and output through a plurality of network nodes.

### <Handling of Input and Output Information and the like>

The input and output information and the like may be saved in a specific place (for example, a memory) or may be managed using a management table. The input and output information and the like can be overwritten, updated, or additionally written. The output information and the like may be deleted. The input information and the like may be transmitted to another apparatus.

### <Determination Method>

The determination may be made based on a value expressed by one bit (0 or 1), based on a Boolean value (true or false), or based on comparison with a numerical value (for example, comparison with a predetermined value).

### <Variation or the like of Aspects>

The aspects/embodiment described in the disclosure may be used singly, may be used in combination, or may be used by switching them according to execution. Notification of predetermined information (for example, notification of "being X") is not limited to being performed explicitly, and may be performed implicitly (for example, by not notifying the predetermined information).

While the present disclosure has been described in detail, it is obvious to those skilled in the art that the present disclosure is not limited to the embodiment described in the present disclosure. The present disclosure can be implemented as modifications and variations of the aspects without departing from the spirit and the scope of the present disclosure defined by the description of the appended claims. Therefore, the description of the present disclosure is intended for exemplary description and does not limit the present disclosure in any sense.

### <Software>

Regardless of whether the software is called software, firmware, middleware, a microcode, or a hardware description language or by another name, the software should be broadly interpreted to mean an instruction, an instruction set, a code, a code segment, a program code, a program, a subprogram, a software module, an application, a software application, a software package, a routine, a subroutine, an object, an executable file, an execution thread, a procedure, a function, and the like.

The software, the instruction, the information, and the like may be transmitted and received through a transmission medium. For example, when the software is transmitted from a website, a server, or another remote source by using at least one of a wired technique (such as a coaxial cable, an optical fiber cable, a twisted pair, and a digital subscriber line (DSL)) and a radio technique (such as an infrared ray and a microwave), at least one of the wired technique and the radio technique is included in the definition of the transmission medium.

### <Information and Signals>

The information, the signals, and the like described in the present disclosure may be expressed by using any of various different techniques. For example, data, instructions, commands, information, signals, bits, symbols, chips, and the like that may be mentioned throughout the entire description above may be expressed by voltage, current, electromagnetic waves, magnetic fields or magnetic particles, optical fields or photons, or any combination thereof.

Note that the terms described in the present disclosure and the terms necessary to understand the present disclosure may be replaced with terms with the same or similar meaning. For example, at least one of the channel and the symbol may be signaling. The signaling may be a message. The component carrier (CC) may be called a carrier frequency, a cell, a frequency carrier, or the like.

### <" System" and "Network">

The terms "system" and "network" used in the present disclosure can be interchangeably used.

### <Names of Parameters and Channels>

The information, the parameters, and the like described in the present disclosure may be expressed by absolute values, by values relative to predetermined values, or by other corresponding information. For example, radio resources may be indicated by indices.

The above-described names used for the parameters are not limiting names in any respect. Furthermore, numerical formulas and the like using the parameters may be different from the ones explicitly disclosed in the present disclosure. Various channels (for example, PUCCH and PDCCH) and information elements can be identified by any suitable names, and various names assigned to these various channels and information elements are not limiting names in any respect.

### <Base Station>

Terms "base station (BS)," "radio base station," "fixed station," "Node B," "eNode B (eNB)," "gNode B (gNB)," "access point," "transmission point," "reception point," "transmission/reception point," "cell," "sector," "cell group," "carrier," "component carrier," and the like can be used interchangeably in the disclosure. The base station may also be called by terms such as a macro cell, a small cell, a femtocell, and a picocell.

The base station can accommodate one or more (for example, three) cells. When the base station accommodates a plurality of cells, the entire coverage area of the base station can be divided into a plurality of smaller areas, and in each of the smaller areas, a communication service can be provided by a base station subsystem (for example, a small base station for indoor, remote radio head (RRH)). The term "cell" or "sector" denotes part or all of the coverage area of at least one of the base station and the base station subsystem that provide the communication service in the coverage.

### <Mobile Station>

The terms "mobile station (MS)," "user terminal," "user equipment (UE)," "terminal," and the like can be interchangeably used in the present disclosure.

The mobile station may be sometimes called, by those skilled in the art, a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, client, or some other appropriate terms.

### <Base Station/Mobile Station>

At least one of the base station and the mobile station may be called a transmission apparatus, a reception apparatus, a communication apparatus, and the like. Note that at least one of the base station and the mobile station may be a device mounted on a movable body, a movable body itself, or the like. The movable body may be a vehicle (for example, a car or an airplane), may be an unmanned movable body (for example, a drone or a self-driving vehicle), or may be a robot (manned or unmanned). Note that at least one of the base station and the mobile station also includes an apparatus that does not necessarily move during communication operation. For example, at least one of the base station and the mobile station may be an IoT (Internet of Things) device such as a sensor.

The base station in the disclosure may be read as a user terminal. For example, the aspects/embodiment of the disclosure may be applied to a configuration in which communication between the base station and the user terminal is replaced with communication between a plurality of user terminals (for example, may be called D2D (Device-to-Device) and V2X (Vehicle-to-Everything)). In this case, user terminal 20 may have the above-described functions of base station 10. In addition, the terms "uplink," "downlink," and the like may be read as a term (for example, "side") corresponding to inter-terminal communication. For example, the uplink channel, the downlink channel, and the like may be read as a side channel.

In the same manner, the user terminal in the disclosure may be read as a base station. In this case, base station 10 may have the above-described functions of user terminal 20.

### <Meaning and Interpretation of Terms>

The term "determining" used in the disclosure may encompass a wide variety of actions. For example, "determining" may include regarding, as "determining," judging, calculating, computing, processing, deriving, investigating, looking up (or searching or inquiring) (e.g., looking up in a table, a database, or another data structure), and ascertaining. Also, "determining" may include regarding, as "determining," receiving (e.g., receiving information), transmitting (e.g., transmitting information), inputting, outputting, and accessing (e.g., accessing data in a memory). Also, "determining" may include regarding, as "determining," resolving, selecting, choosing, establishing, comparing, or the like. That is, "determining" may include regarding some action as "determining." In addition, "determining" may be read as assuming, expecting, considering, or the like.

The terms "connected" and "coupled" as well as any modifications of the terms mean any direct or indirect connection or coupling between two or more elements, and can encompass the presence of one or more intermediate elements between two elements "connected" or "coupled" with each other. The coupling or the connection between elements may be physical or logical or may be a combination thereof. For example, "connection" may be read as "access." When the terms are used in the present disclosure, two elements can be considered to be "connected" or "coupled" with each other by using at least one of one or more electrical wires, cables, and printed electrical connections, or by using electromagnetic energy with a wavelength of a radio frequency domain, a microwave domain, or an optical (both visible and invisible) domain as non-limiting and non-inclusive examples.

### <Reference Signal>

The reference signal can be abbreviated as RS and may be called a pilot depending on an applied standard.

### <Meaning of "Based On">

The description "based on" used in the disclosure does not mean "based only on," unless otherwise specifically stated. In other words, the description "based on" means both of "based only on" and "based at least on."

### <"First" and "Second">

Any reference to elements using designations such as "first" and "second" used in the disclosure does not generally limit amounts or order of the elements. These designations can be used herein as a convenient way to distinguish between two or more elements. Thus, reference to first and second elements does not imply that only two elements may be employed or that the first element must precede the second element in some way.

### <Means>

"Means" in the configuration of each of the above-described apparatuses may be replaced with "section," "circuit," "device," and the like.

### <Open Form>

As long as "include," "including," and modifications thereof are used in the disclosure, the terms are intended to be inclusive just like the term "comprising." Furthermore, the term "or" used in the disclosure is not intended to be an exclusive or.

### <Time Unit of TTI and the like, Frequency Unit of RB and the like, and Radio Frame Configuration>

The radio frame may be constituted by one or more frames in the time domain. Each of the one or more frames may be called a subframe in the time domain.

The subframe may be further constituted by one or more slots in the time domain. The subframe may be a fixed time length (for example, 1 ms) independent of numerology.

The numerology may be a communication parameter applied to a certain signal or at least one of transmission and reception of a channel. The numerology may indicate at least one of, for example, subcarrier spacing (SCS), bandwidth, symbol length, cyclic prefix length, a transmission time interval (TTI), the number of symbols per TTI, a radio frame configuration, specific filtering processing which a transceiver performs in the frequency domain, and specific windowing processing which the transceiver performs in the time domain.

The slot may be composed of one or more symbols (OFDM (Orthogonal Frequency Division Multiplexing) symbols, SC-FDMA (Single Carrier Frequency Division Multiple Access) symbols, or the like) in the time domain. The slot may be a time unit based on numerology.

The slot may include a plurality of minislots. Each minislot may be composed of one or more symbols in the time domain. The minislot may be called a subslot. The minislot may be composed of a fewer number of symbols than the slot. PDSCH (or PUSCH) transmitted in a time unit larger than the minislot may be called a PDSCH (or PUSCH) mapping type A. PDSCH (or PUSCH) transmitted using the minislot may be called a PDSCH (or PUSCH) mapping type B.

All of the radio frame, the subframe, the slot, the minislot, and the symbol represent time units when signals are transmitted. For the radio frame, the subframe, the slot, the minislot, and the symbol, different designations corresponding to each may be used.

For example, one subframe may be called a transmission time interval (TTI), or a plurality of consecutive subframes may be called a TTI, or one slot or one minislot may be called a TTI. That is, at least one of the subframe and the TTI may be the existing subframe (1 ms) in LTE, may be a period shorter than 1 ms (for example, 1-13 symbols), or may be a period longer than 1 ms. Note that the unit representing the TTI may be called a slot, a minislot, or the like rather than the subframe.

Here, the TTI refers to, for example, the minimum time unit of scheduling in radio communication. For example, in the LTE system, the base station performs scheduling of allocating radio resources (frequency bandwidth, transmission power, or the like which each user terminal can use) to each user terminal in TTI units. Note that the definition of the TTI is not limited to this.

The TTI may be a transmission time unit for a channel-coded data packet (transport block), a code block, a code word, or the like, or may be a processing unit for scheduling, link adaptation, or the like. Note that, when a TTI is given, a time interval (for example, the number of symbols) in which a transport block, a code block, a code word, or the like is actually mapped may be shorter than the TTI.

When one slot or one minislot is called a TTI, one or more TTIs (that is, one or more slots or one or more minislots) may be the minimum time unit for scheduling. In addition, the number of slots (number of minislots) constituting the minimum time unit of the scheduling may be controlled.

A TTI having a time length of 1 ms may be called a usual TTI (TTI in LTE Rel. 8-12), a normal TTI, a long TTI, a usual subframe, a normal subframe, a long subframe, a slot, or the like. A TTI shorter than the usual TTI may be called a shortened TTI, a short TTI, a partial or fractional TTI, a shortened subframe, a short subframe, a minislot, a subslot, a slot or the like.

The long TTI (for example, the usual TTI and the subframe) may be read as a TTI having a time length exceeding 1 ms, and the short TTI (for example, the shortened TTI) may be read as a TTI having a TTI length less than the TTI length of the long TTI and equal to or more than 1 ms.

A resource block (RB) is a resource assignment unit in the time domain and the frequency domain, and may include one subcarrier or a plurality of continuous subcarriers in the frequency domain. The number of subcarriers included in the RB may be the same regardless of numerology, and may be, for example, 12. The number of subcarriers included in the RB may be determined based on numerology.

In addition, the RB may include one or more symbols in the time domain, and may have the length of one slot, one minislot, one subframe, or one TTI. One TTI, one subframe, and the like may be constituted by one or more resource blocks.

One or more RBs may be called a physical resource block (PRB: Physical RB), a subcarrier group (SCG), a resource element group (REG), a PRB pair, an RB pair, or the like.

The resource block may be constituted by one or more resource elements (REs). For example, one RE may be a radio resource region of one subcarrier and one symbol.

A bandwidth part (BWP) (may be called partial bandwidth or the like) may represent a subset of consecutive common RBs (common resource blocks) for certain numerology in a certain carrier. Here, the common RBs may be specified by an index of the RB based on a common reference point of the carrier concerned. A PRB may be defined by certain BWP, and numbered in the BWP.

The BWP may include BWP for UL (UL BWP) and BWP for DL (DL BWP). One or more BWPs are set in one carrier for the UE.

At least one of set BWPs may be active, and the UE may not assume that the UE transmits or receives a predetermined signal/channel outside the active BWP. Note that "cell," "carrier," and the like in the disclosure may be read as "BWP."

The above-described structures of the radio frame, the subframe, the slot, the minislot, the symbol, and the like are merely examples. It is possible to variously change the configurations, for example, the number of subframes included in the radio frame, the number of slots per subframe or radio frame, the number of minislots included in the slot, the numbers of symbols and RBs included in the slot or the minislot, the number of subcarriers included in the RB, and the number of symbols in the TTI, symbol length, and cyclic prefix (CP) length.

### <Maximum Transmission Power>

The "maximum transmission power" described in the disclosure may mean the maximum value of transmission power, may mean the nominal UE maximum transmit power, or may mean the rated UE maximum transmit power.

### <Article>

When articles, for example, like "a," "an," and "the" in English, are added by translation in the disclosure, the disclosure may include plural forms of nouns following these articles.

### <"Different">

The clause "A and B are different" in the disclosure may mean "A and B are mutually different." Note that the clause may mean "A and B are each different from C." The terms "leaving," "coupled," and the like may be interpreted in the same manner as "different."

### Industrial Applicability

An aspect of the present disclosure is useful for a radio communication system.

### Reference Signs List

10, 10a, 10b Base Station
20, 20a, 20b Terminal
101, 202 Transmission Section
102, 201 Reception Section
103, 203 Control Section

## Claims

1. A terminal, comprising:
a reception section that receives adjustment information for adjusting a communication timing based on a reference time; and
a control section that controls a granularity of adjusting the communication timing, according to a size of the adjustment information.

2. The terminal according to claim 1, wherein
the adjustment information is included in response information with respect to a random access request; and
the adjustment information of a first size indicates a first granularity related to adjustment of the communication timing and the adjustment information of a second size indicates a second granularity finer than the first granularity.

3. The terminal according to claim 1, wherein
the adjustment information is included in control information destined to the terminal; and
the adjustment information of a first size indicates a first granularity related to adjustment of the communication timing and the adjustment information of a second size indicates a second granularity finer than the first granularity.

4. The terminal according to claim 3, wherein the control section adjusts the communication timing according to the adjustment information of the first size when time reference information is not included in predetermined system information received by the reception section, and the control section adjusts the communication timing according to the adjustment information of the second size when the time reference information is included in the predetermined system information received by the reception section.

5. The terminal according to claim 3, wherein the control section adjusts the communication timing according to the adjustment information of the first size when the control information is in a first format, and the control section adjusts the communication timing according to the adjustment information of the second size when the control information is in a second format.

6. A communication method, comprising:
receiving, by a terminal, adjustment information for adjusting a communication timing based on a reference time; and
controlling, by the terminal, a granularity of adjusting the communication timing according to a size of the adjustment information.
